## Europäisches Patentamt

## European Patent Office

## Office européen des brevets

(11) Veröffentlichungsnummer: **0 204 023**
**B1**

(12) **EUROPÄISCHE PATENTSCHRIFT**

(45) Veröffentlichungstag der Patentschrift:
**14.06.89**

(51) Int. Cl.⁴: **B 27 B 9/04**

(21) Anmeldenummer: **85108867.4**

(22) Anmeldetag: **16.07.85**

(54) Längsführung, insbesondere für eine Kreissäge.

(30) Priorität: **01.06.85 DE 8516029 U**

(43) Veröffentlichungstag der Anmeldung:
**10.12.86 Patentblatt 86/50**

(45) Bekanntmachung des Hinweises auf die Patenterteilung:
**14.06.89 Patentblatt 89/24**

(84) Benannte Vertragsstaaten:
**AT CH DE FR IT LI NL**

(56) Entgegenhaltungen:
**AT-B- 347 107**
**DE-A- 3 341 003**
**US-A- 3 186 452**

(73) Patentinhaber: **Mafell-Maschinenfabrik Rudolf Mey GmbH & Co. KG, Postfach 1180, D-7238 Oberndorf a.N. Aistaig (DE)**

(72) Erfinder: **Heinzelmann, Werner, Felbenstrasse 3, D-7238 Oberndorf-Aistaig (DE)**

(74) Vertreter: **Schmid, Berthold et al, Patentanwälte Dipl.-Ing. B. Schmid Dr. Ing. G. Birn Falbenhennenstrasse 17, D-7000 Stuttgart 1 (DE)**

ACTORUM AG

## Beschreibung

Die Erfindung bezieht sich auf eine Längsführung für ein elektrisches Handwerkzeug, insbesondere eine Kreissäge, entlang einem schienenförmigen Führungslineal, mit einem am Führungslineal formschlüssig schiebbar gelagerten, am Handwerkzeug abnehmbar gehaltenen, im wesentlichen U-förmigen Adapter. Eine derartige Längsführung für eine Handkreissäge ist durch die AT-A-347 107 bekanntgeworden. Die beiden U-Schenkel des Adapters bestehen aus im wesentlichen ihrerseits U-förmigen Führungsstücken, welche über eine Leiste miteinander verbunden sind, wobei letztere das U-Mittelstück des Adapters bildet. Daran wird die Kreissäge befestigt. Jeder Adapter-U-Schenkel ist mit drei Rollkörpern ausgestattet, welche eine leichtgängige Verschiebung der Kreissäge entlang dem Führungslineal gewährleisten. Es kann, zumindest bei unglücklich aufeinandertreffenden Toleranzen, vorkommen, daß der Adapter gegenüber dem Führungslineal zuviel Spiel aufweist und infolgedessen keine absolut geradlinige Bearbeitung oder Durchtrennung des Werkstücks gewährleistet.

Das Führungslineal wird parallel zur beabsichtigten Trennstelle am normalerweise plattenförmigen Werkstück befestigt. Es wird so angebracht, daß das Sägeblatt genau entlang der beabsichtigten Schnittstelle geführt wird. Wenn mit dem Handwerkzeug bzw. der Kreissäge keine gerade verlaufende Kante bearbeitet oder erstellt werden soll, so nimmt man das Führungslineal ab und arbeitet mit anderweitigem, insbesondere freiem, Vorschub.

Bei Kreissägen muß die Schnittfläche nicht in jedem Falle senkrecht zur Werkstückoberfläche verlaufen, vielmehr wird gelegentlich auch ein sogenannter Gehrungsschnitt verlangt. Der vorbekannte Adapter ist hierfür offensichtlich nicht geeignet.

Demgegenüber ist mit einer durch die DE-OS 33 41 003 bekanntgewordenen Führungseinrichtung für eine transportable Säge das Erstellen von Gehrungskanten möglich. Bei dieser Führungseinrichtung läßt «sich das Laufspiel zwischen Tragplatte und Führungsplatte einstellen». Dabei gibt es die Möglichkeit der Fixeinstellung oder der ständigen Selbsteinstellung über eine Feder bzw. ein federelastisches Druckglied. Der Nachteil dieser Konstruktion liegt darin, daß die formschlüssige Längsführung von der Ebene des Sägeblatts einen festen Abstand aufweist und infolgedessen das Führungslineal mit sehr hoher Genauigkeit am Werkstück montiert werden muß. Jeder seitliche Vorsatz von der zu erstellenden Sägekante führt zu einem schlechten, wenn nicht gar unbrauchbaren Ergebnis. Bei den selbsteinstellenden Stellgliedern der Spielbegrenzungs-Zustellvorrichtung besteht die Gefahr, daß sie bei einer entgegen ihrer Federkraft wirkenden Kraft aus dem Sägevorgang weggedrückt und dadurch die exakte spielfreie Längsführung aufgehoben wird. Bei allen Ausführungsformen ist nur eine punktuelle Ausschaltung des Querspiels möglich.

Durch die US-PS 3 186 452 ist eine weitere Längsführung für tragbare Sägen bekanntgeworden. Eine Ausschaltung des Spiels quer zur Längsführung der Säge ist dort nur im Rahmen einer Festeinstellung möglich. Die vorgesehene Konstruktion erfordert wiederum ein sehr genaues Ausrichten der Führungsschiene gegenüber der zu erstellenden Sägekante.

Auch bei der Längsführung gemäß der AT-PS 347 107 muß die Führungsschiene gegenüber der zu erstellenden Sägekante genau ausgerichtet werden. Außerdem läßt sich dort das Spiel quer zur Längsführung nicht ausschalten.

Die Aufgabe der Erfindung besteht infolgedessen darin, eine Längsführung für ein elektrisches Handwerkzeug, insbesondere eine Kreissäge, entlang einem schienenförmigen Führungslineal gemäß dem Oberbegriff des Anspruchs 1 so weiterzubilden, daß das Handwerkzeug, insbesondere die Kreissäge, entlang dem Werkstück sicher geradlinig geführt wird, dabei bezüglich der Werkstückebene innerhalb vorgegebener Grenzen neigbar sowie gegenüber der vorgesehenen Schnittstelle leicht ausrichtbar ist, wobei die Führung in jeder Lage des Handwerkzeugs optimal gewährleistet sein soll.

Zur Lösung dieser Aufgabe wird erfindungsgemäß vorgeschlagen, daß die Längsführung für ein elektrisches Handwerkzeug, insbesondere eine Kreissäge, entlang einem schienenförmigen Führungslineal, mit einem am Führungslineal formschlüssig schiebbar gelagerten, am Handwerkzeug abnehmbar gehaltenen, im wesentlichen U-förmigen Adapter erfindungsgemäß dadurch gekennzeichnet ist, daß die beiden U-Schenkel des Adapters mit einer Grundplatte der Kreissäge quer zur Längsachse des Führungslineals verschieb- und feststellbar verbunden sind und das Adapter-U-Mittelstück in eine seinem Querschnitt angepasste Führungsnut des Führungslineals eingreift, wobei die Führungsnut einen U-förmigen Querschnitt aufweist und der eingreifende Teil des Adapter-U-Mittelstücks mit einem U-förmigen Querschnitt versehen ist, daß außerdem zur Einstellung der quer zur Schieberichtung verlaufenden Breite des Adapter-U-Mittelstücks dessen U-Schenkel federelastisch aufspreizbar sind. Durch die Verwendung eines an sich durch die AT-PS bekannten Adapters und dessen verschieb- sowie feststellbare Verbindung mit der Kreissäge bzw. der Kreissägen-Grundplatte läßt sich nun auf sehr einfache Weise der Seitenabstand des Sägeblatts von dem auf dem Werkstück befestigten Führungslineal rasch einstellen. Dadurch ist ein äußerst genaues Sägen an der vorgesehenen Stelle des Werkstücks möglich. Darüber hinaus bleibt das Neigen der Sägeblattebene gegenüber der Werkstückebene uneingeschränkt erhalten, so daß man auch schräge Schnitte bzw. Gehrungskanten erstellen kann. Es kommt noch hinzu, daß sich das Spiel quer zur Längsrichtung des Führungslineals und damit quer zur Verschieberichtung der Kreissäge oder dgl. vollständig eliminieren läßt, weswegen ein absolut geradliniger Schnitt vorgenommen werden kann.

Der Adapter wird an geeigneter Stelle des Handwerkzeugs abnehmbar befestigt. Wenn der Adapter nicht mit dem Antrieb, sondern der Grundplatte verbunden ist, kann letzere unabhängig von der Schrägstellung der Werkzeugachse gegenüber der Grundplattenebene oder der Führungslinealebene stets entlang dem Führungslineal gleiten, wobei sein U-Mittelstück ebenfalls unabhängig von der Neigung der Sägeblattebene immer in gleicher Weise in die Führungsnut des Führungslinieals eingreift. Bei den beiden U-Schenkeln des Adapters handelt sich sich vorzugsweise um Bolzen, die ein genaues Einstellen der Grundplatte gegenüber der werkzeugseitigen Längskante des Führungslinieals ermöglichen. Die Bolzen durchsetzen beispielsweise Lageraugen mit Klemmschrauben, wodurch ein schnelles Ausrichten, aber auch ein rasches Lösen des Adapters von der Grundplatte möglich ist. Das Führungslinieal kann auf diese Weise gleichzeitig als Niederhalter dienen, der das Ausreißen des Holzes verhindert.

Wenn man das Adapter-U-Mittelstück aus Blech biegt, so muß man mit relativ großen Toleranzen rechnen. Außerdem ist bei großen Serien eine maßliche Abweichung zwischen den am Anfang und am Ende gefertigten Teilen unvermeidlich. Auch im Gebrauch können sich gewisse Abnutzungen einstellen. In all den genannten Fällen läßt sich durch die Einstellbarkeit die spielfreie Längsführung sowohl bei der Erstbenutzung als auch nach jahrelangem Gebrauch gewährleisten und trotzdem eine leichtgängige Verschiebung entlang dem Führungslinieal ermöglichen. Bei der Festlegung der Toleranzen muß man beachten, daß lediglich eine Verbreiterung, jedoch keine Breitenverringerung des Adapter-U-Mittelstücks möglich ist. Außerdem können die U-Schenkel des Adapter-Mittelstücks nicht beliebig aufgeweitet werden, sondern nur innerhalb gewisser Grenzen, die vor allen Dingen durch das Material und die verschiedenen Abmessungen bedingt sind. Das Aufspreizen muß so vorgenommen werden, daß eine selbsttätige, federelastische Rückstellung verhindert wird. Außerdem muß es feinfühlig vornehmbar sein, um ein anfangs vorhandenes Querspiel genau auf den das leichte Schieben gerade noch ermöglichenden Minimalwert zu reduzieren.

Eine Weiterbildung der Erfindung sieht vor, daß sich zwischen den beiden U-Schenkeln des Adapter-U-Mittelstücks wenigstens eine Spreizvorrichtung befindet. Weil das Adapter-U-Mittelstück bei einer Kreissäge in Schieberichtung eine vergleichsweise große Länge von beispielsweise 30 cm aufweisen kann, ist es zweckmäßig, nicht nur eine, sondern wenigstens zwei in Schieberichtung hintereinander angeordnete Spreizvorrichtungen vorzusehen.

Eine weitere Ausgestaltung der Erfindung besteht darin, daß jede Spreizvorrichtung aus zwei gegeneinanderweisenden, in den U-Schenkeln gehaltenen Druckgliedern besteht, zwischen deren keilige oder konische Enden ein zustellbares Spreizglied eingreift. Jedes Druckglied ist vorzugsweise an einem U-Schenkel des U-Mittelstücks gehalten, jedoch schließt dies eine einstückige Fertigung jedes Druckglieds mit einem U-Schenkel nicht aus. Bei einer Fertigung aus Blech wird jedoch der separaten Herstellung der Druckglieder der Vorzug gegeben.

Eine besonders bevorzugte Ausführungsform der Erfindung kennzeichnet sich dadurch, daß die Druckglieder Bolzen sind und das Spreizglied ein Gewindestift oder dgl., dessen kegeliges Ende gleichzeitig an den kegeligen oder kegelstumpfförmigen Enden der Druckglieder anliegt. Mit dem Einschrauben des Gewindestiftes drückt dessen kegeliges und kegelstumpfförmiges Ende gegen die gleichartigen Enden der Druckglieder und drückt diese um einen der Einschraubtiefe entsprechenden Betrag nach entgegengesetzten Richtungen weg. Weil aber die Druckglieder zumindest in Druckrichtung fest mit jeweils einer Wand des im Querschnitt U-förmigen Adapter-U-Mittelstücks verbunden sind, bewirkt das Eindrehen des Gewindestiftes zugleich ein Auseinanderspreizen der beiden Wandungen, d.h. eine Verbreiterung des Adapter-U-Mittelstücks, zumindest im Bereich dieser Spreizvorrichtung. Da die Breite der Führungsnut des Führungslinieals vorgegeben ist, bewirkt die Verbreiterung oder zumindest örtliche Verbreiterung des Adapter-U-Mittelstücks eine Verringerung des Spiels zwischen Adapter und Führungsnut. Auf diese Weise läßt sich das nachteilige Spiel vollständig ausschalten.

Eine weitere Variante der Erfindung sieht vor, daß die Druckglieder schiebbar in einem Haltekörper gelagert sind und ihr äußeres Ende unverschiebbar im zugeordneten U-Schenkel des Adapter-U-Mittelstücks gehalten ist, und daß in einer hierzu senkrechten Gewindebohrung des Haltestücks das Spreizglied verschraubbar ist. Die Verschraubung ist selbsthemmend, so daß vorhandene Rückstellkräfte den Gewindestift nicht herauszudrehen vermögen. Der Haltekörper wird seinerseits zwischen den U-Schenkeln des Adapter-U-Mittelstücks dadurch sicher gehalten, daß die voneinander entfernten Enden der beiden Druckglieder je in einen entsprechenden, insbesondere kreisförmigen Durchbruch ihres zugeordneten U-Schenkels eingreifen. Zweckmäßigerweise sind diese eingreifenden Enden zapfenförmig und im Durchmesser kleiner als die Druckglieder, so daß eine entsprechende Abstützschulter entsteht.

Eine andere Ausbildung der Erfindung besteht darin, daß das Adapter-U-Mittelstück ein gebogenes Blech-Stanzteil ist und sich im Bereich jeder Spreizvorrichtung eine Ausstanzung, zumindest am Boden des U-Mittelstücks befindet. Diese Ausstanzung bewirkt eine gewisse Schwächung, d.h. Reduzierung der Steifigkeit ohne die Festigkeit des gesamten Teils zu beeinträchtigen. Andererseits läßt sich aufgrund der reduzierten Steifigkeit die Spreizvorrichtung mit geringerem Kraftaufwand betätigen. In besonders bevorzugter Art weist die Ausstanzung die Form eines Kreuzes auf, dessen langer Schenkel sich in Längsrichtung des Adapter-U-Mittelstücks erstreckt und dessen kurzer Schenkel senkrecht dazu verläuft sowie etwa bis zu den U-Schenkeln des U-Mittelstücks reicht. Es ist selbstverständlich, daß man diesen «Kreuzschlitz» am besten mittig zu den beiden U-Schenkeln anordnet.

Die Erfindung wird nachstehend anhand der Zeichnung näher erläutert.

Die Zeichnung zeigt ein Ausführungsbeispiel der Erfindung. Hierbei stellen dar:

Fig. 1 eine Vorderansicht des Adapters und einen Schnitt durch das Führungslinieal mit schematisch angedeuteter Kreissäge,

Fig. 2 einen Schnitt durch den Adapter, gemäß der Linie II-II der Fig. 5,

Fig. 3 eine abgebrochene Draufsicht auf den Adapter in Richtung des Pfeils A der Fig. 1, in vergrößertem Maßstab,

Fig. 4 teils in Seitenansicht und teilweise geschnitten den Adapter in Pfeilrichtung B der Fig. 1 gesehen,

Fig. 5 eine Draufsicht auf Fig. 4.

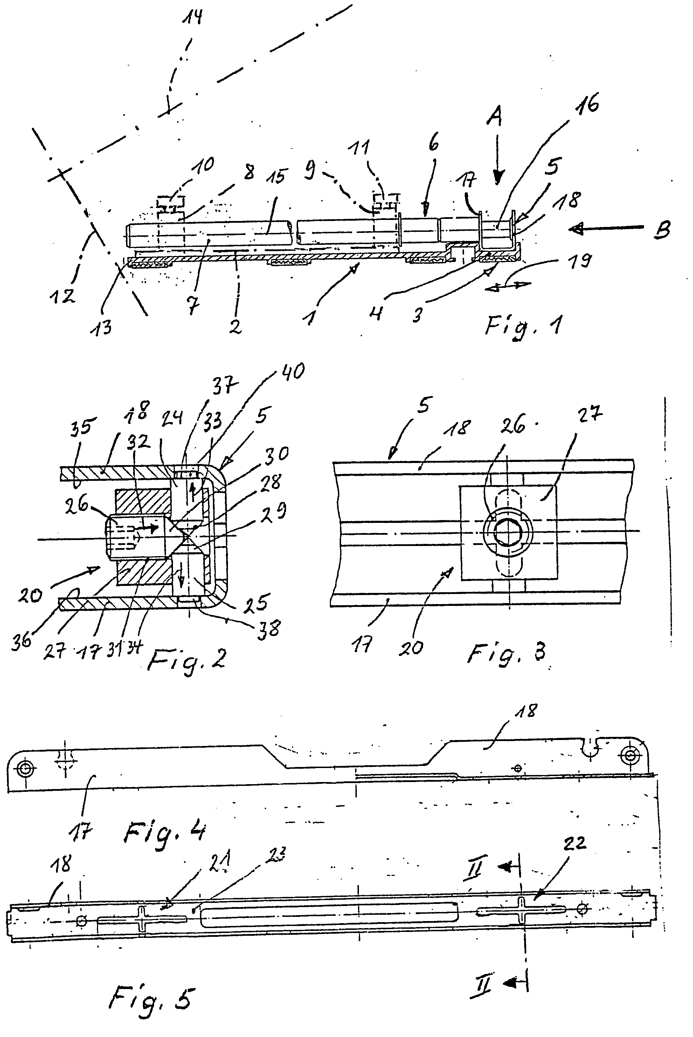

Beim Ausführungsbeispiel handelt es sich um eine Längsführung für eine elektrische Handkreissäge. Sie wird senkrecht zur Bildebene entlang einem Führungslinieal 1 verschoben, wobei ihre Grundplatte 2 entlang dem flachen Teil des Führungslinieals gleitet. An seinem in Fig. 1 rechten Längsbereich 3 besitzt das Führungslinieal 1 eine im Querschnitt U-förmige Führungsnut 4. In diese greift das U-Mittelstück 5 eines im wesentlichen U-förmigen Adapters 6 ein. Die beiden U-Schenkel 7 des Adapters 6 haben jeweils eine bolzenförmige Gestalt. Jeder durchsetzt zwei mit der Grundplatte 2 verbundene Befestigungsklötze 8 und 9 oder dgl. und er wird darin nach entsprechender Justierung mit Hilfe jeweils einer Befestigungsschraube 10 und 11 gehalten. Auf diese Weise läßt sich das Kreissägeblatt 12 oder ein entsprechendes anderes Werkzeug eines elektrischen Handwerkzeugs gegenüber der zugeordneten Längskante 13 des Führungslinieals 1 ausrichten. Die Sägeblattebene verläuft in Fig. 1 geneigt zur Ebene des Führungslinieals, d.h. in dieser Einstellung der Antriebsachse 14 gegenüber der Führungsliniealebene kann man Gehrungsschnitte ausführen. Im Normalfalle verläuft die Ebene des Kreissägeblatts 12 rechtwinklig zur Längsachse 15 der Adapter-U-Schenkel 7 bzw. senkrecht zur Ebene des Führungslinieals 1.

Das U-Mittelstück 5 des U-förmigen Adapters 6 ist, wie insbesondere Fig. 2 der Zeichnung deutlich zeigt, aus einem gestanzten Blech hergestellt und hat seinerseits einen U-förmigen Querschnitt. Die beiden U-Schenkel 7 des Adapters 6 bzw. deren im Querschnitt reduzierter Zapfen 16 durchsetzt jeweils die beiden U-Schenkel 17 und 18 des U-Mittelstücks 5 und sein freies Ende ist mit dem zugeordneten U-Schenkel 18 vernietet oder in anderer geeigneter Weise fest verbunden.

Wie insbesondere Fig. 1 der Zeichnung deutlich zeigt, ist der Querschnitt des U-Mittelstücks 5 des Adapters 6 demjenigen der Führungsnut 4 angepaßt. Im Sinne des Doppelpfeils 19 kann jedoch aufgrund gewählten Toleranzen und anderweitiger Einflüsse ein Spiel vorhanden sein, welches die Geradführung nachteilig beeinflußt. Aus diesem Grunde ist gemäß der Erfindung eine Einstellung der wirksamen Breite (gemessen im Sinne des Doppelpfeils 19) des Adapter-U-Mittelstücks 5 an die lichte Weite der Führungsnut 4 des Führungslinieals 1 vorgesehen, mit welcher das Spiel auf einen Gleit- oder Schiebesitz reduziert wird. Dadurch ist ein verwacklungsfreies Verfahren der Säge entlang dem Führungslinieal 1 möglich. Eine entsprechende Spreizvorrichtung 20 ist in den Fig. 2 und 3 in vergrößerter Darstelung zu sehen. Beim Ausführungsbeispiel sind zwei derartige Spreizvorrichtungen 20 vorhanden. Sie befinden sich im Bereich der kreuzförmigen Ausstanzungen 21 und 22 am Boden 23 des U-Mittelstücks 5 des Adapters 6.

Jede Spreizvorrichtung 20 besteht aus zwei Druckgliedern 24 und 25 sowie einem zustellbaren Spreizglied 26. Alle drei sind in einem Haltekörper 27 gelagert. Außerdem sind ihre gegeneinanderweisenden, jeweils einen rechten Winkel miteinander einschließenden inneren Enden 28 und 29 bzw. 30 kegelig oder wie beim Ausführungsbeispiel kegelstumpfförmig. Das Spreizglied 26 ist vorzugsweise als Gewindestift ausgebildet und es kann, insbesondere mittels eines Sechskantschlüssels, in einem Gewinde 31 des Haltekörpers 27 verschraubt werden. Wenn man es im Sinne des Pfeils 32 einschraubt, so drückt sein kegelstumpfförmiges Ende 30 gegen die Enden 28 und 29 der Druckglieder 24 und 25, so daß diese im Sinne der Pfeile 33 bzw. 34 ausweichen. Weil sich jedes Druckglied 24 bzw. 25 mit einer Schulter an der Innenfläche 35 bzw. 36 seines U-Schenkels 17 bzw. 18 abstützt, führt das Hineindrehen des Spreizglieds 26 zu einem Auseinanderspreizen der U-Schenkel 17 und 18 des Adapter-U-Mittelstücks 5. Infolgedessen vergrößert sich dessen wirksame Breite, und dies hat eine Verringerung des Spiels in der Führungsnut 4 des Führungslinieals 1 im Sinne des Doppelpfeils 19 zur Folge.

Um das Aufspreizen der beiden U-Schenkel 17 und 18 zu erleichtern, ist im Bereich jeder Spreizvorrichtung 20 die bereits erwähnte kreuzförmige Ausstanzung 21 bzw. 22 am Boden 23 des Adapter-U-Mittelstücks angebracht.

Jedes Druckglied 24 bzw. 25 hat zur Bildung der erwähnten Schulter an seinem äußeren Ende einen im Querschnitt reduzierten Zapfen 37 bzw. 38 der in eine zugeordnete Bohrung oder Ausstanzung 40 des U-Schenkels 17 bzw. 18 eingreift und dadurch die Spreizvorrichtung an der vorgesehen Stelle festhält.

**Patentansprüche**

1. Längsführung für ein elektrisches Handwerkzeug, insbesondere eine Kreissäge, entlang einem schienenförmigen Führungslinieal (1), mit einem am Führungslinieal formschlüssig schiebbar gelagerten, am Handwerkzeug abnehmbar gehaltenen, im wesentlichen U-förmigen Adapter (6), dadurch gekennzeichnet, daß die beiden U-Schenkel (7) des Adapters (6) mit einer Grundplatte (2) der quer zur Längsachse des Führungslinieals (1) verschieb- und feststellbar verbunden sind und das Adapter-U-Mittelstück (5) in eine seinem Querschnitt angepasste Führungsnut (4) des Führungslinieals (1) eingreift, wobei die Führungsnut (4) einen U-förmigen Querschnitt aufweist und der eingreifende Teil des Adapter-U-Mittelstücks (5) mit einem U-förmigen Querschnitt versehen ist, daß außerdem zur Einstellung der quer zur Schieberichtung verlaufenden Breite des Adapter-U-Mittelstücks (5) dessen U-Schenkel (17, 18) federelastisch ausspreizbar sind.

2. Längsführung nach Anspruch 1, dadurch gekennzeichnet, daß sich zwischen den beiden U-Schenkeln (17, 18) des Adapter-U-Mittelstücks (5) wenigstens eine Spreizvorrichtung (20) befindet.

3. Längsführung nach Anspruch 2, dadurch gekennzeichnet, daß jede Spreizvorrichtung (20) aus zwei gegeneinanderweisenden, in den U-Schenkeln (17, 18) gehaltenen Druckgliedern (24, 25) besteht, zwischen deren keilige oder konische Enden (28, 29) ein zustellbares Spreizglied (26) eingreift.

4. Längsführung nach Anspruch 3, dadurch gekennzeichnet, daß die Druckglieder (24, 25) Bolzen sind und das Spreizglied (26) ein Gewindestift oder dgl. ist, dessen kegeliges Ende (30) gleichzeitig an den kegeligen oder kegelstumpfförmigen Enden (28, 29) der Druckglieder (24, 25) anliegt.

5. Längsführung nach Anspruch 4, dadurch gekennzeichnet, daß die Druckglieder (24, 25) schiebbar in einem Haltekörper (27) gelagert sind und ihr äußeres Ende (37, 38) unverschiebbar im zugeordneten U-Schenkel (17, 18) des Adapter-U-Mittelstücks (5) gehalten ist, und daß in einer hierzu senkrechten Gewindebohrung (31) des Haltekörpers (27) das Spreizglied (26) verschraubbar ist.

6. Längsführung nach wenigstens einem der Ansprüche 2 bis 5, dadurch gekennzeichnet, daß das Adapter-U-Mittelstück (5) ein gebogenes Blech-Stanzteil ist und sich im Bereich jeder Spreizvorrichtung (20) eine Ausstanzung (21, 22) zumindest am Boden (23) des U-Mittelstücks (5) befindet.

7. Längsführung nach Anspruch 6, dadurch gekennzeichnet, daß die Ausstanzung (21, 22) die Form eines Kreuzes aufweist, dessen langer Schenkel sich in Längsrichtung des Adapter-U-Mittelstücks (5) erstreckt und dessen kurzer Schenkel senkrecht dazu verläuft und etwa bis zu den U-Schenkeln (17, 18) des U-Mittelstücks (5) reicht.

## Claims

1. Longitudinal guide for an electric hand tool, in particular a circular saw, along a rail shaped guide arm (1), with a substantially U-shaped adapter (6) held detachably on the hand tool, and slidably on the guide arm, characterised in that both arms of the U (7) of the adapter (6) are detachably and lockably connected to a base plate (2) of the circular saw transverse to the longitudinal axis of the guide arm (1) and the central part (5) of the U-shaped adapter engages a guide groove (4) of the guide arm (1) adapted to its cross-sectional shape, wherein the guide groove (4) has a U-shaped cross-section and the engaging part of the central part (5) of the U-shaped adapter is provided with a U-shaped cross-section, in that for the adjustment of the width of the central part (5) of the U-shaped adapter transverse to the direction of travel, the arms of the U (17, 18) can be resiliently splayed apart.

2. Longitudinal guide according to Claim 1, characterised in that there is at least one splaying device (20) between the two arms of the U (17, 18) of the central part (5) of the U-shaped adapter.

3. Longitudinal guide according to Claim 2, characterised in that each splaying device (20) consists of two compression members (24, 25) pointing towards each other held inside the arms of the U (17, 18), between the wedge shaped or conical ends of which (28, 29) a closable splaying member (26) is engaged.

4. Longitudinal guide according to Claim 3, characterised in that the compression members (24, 25) are bolts and the splaying member (26) is a threaded rod or the like, the conical end (30) of which is adjacent to both of the conical or frustoconical ends (28, 29) of the compression members (24, 25).

5. Longitudinal guide according to Claim 4, characterised in that the compression members (24, 25) are held slidably on a support body (27) and the outer ends (37, 38) thereof are held non displacably in the associated arms of the U (17, 18) of the central part of the U-shaped adapter, and in that the splaying member (26) can be screwed into a threaded hole (31) of the support body (27) perpendicular hereto.

6. Longitudinal guide according to at least one of the claims 2 to 5, characterised in that the central part (5) of the U-shaped adapter is a curved stamped metal part and there is a stamped out part (21, 22) in the region of each splaying device (20) at least at the base (23) of the U-shaped central part (5).

7. Longitudinal guide according to Claim 6, characterised in that the stamped out part (21, 22) is cross shaped, the longer blade of which extends in the longitudinal direction of the central part (5) of the U-shaped adapter and the shorter blade of which passes perpendicular thereto and almost reaches the arms of the U (17, 18) of the U-shaped central part (5).

## Revendications

1. Dispositif de guidage longitudinal pour un outil manuel électrique, en particulier une scie circulaire, le long d'une réglette de guidage (1) en forme de glissière, comportant un adaptateur (6) substantiellement configuré en U, retenu de manière libérale sur l'outil manuel et monté coulissant, par concordance de formes, sur la réglette de guidage, caractérisé par le fait que les deux branches (7) du U de l'adaptateur (6) sont reliées à une plaque de base (2) de la scie circulaire, avec faculté de coulissement et d'arrêt transversalement par rapport à l'axe longitudinal de la réglette de guidage (1), et la pièce centrale (5) du U de l'adaptateur pénètre dans une rainure de guidage (4) de la réglette de guidage (1), qui est adaptée à sa section, ladite rainure de guidage (4) présentant une section en U et la partie d'engagement de la pièce centrale (5) du U de l'adaptateur étant dotée d'une section en U; et par le fait que, en vue du réglage de la largeur de la pièce centrale (5) du U de l'adaptateur, s'étendant transversalement par rapport à la direction de coulissement, les branches (17, 18) du U de ladite pièce peuvent, en outre, être écartées avec l'élasticité d'un ressort.

2. Dispositif de guidage longitudinal selon la revendication 1, caractérisé par le fait qu'au moins un dispositif d'écartement (20) se trouve entre les deux branches (17, 18) du U de la pièce centrale (5) du U de l'adaptateur.

3. Dispositif de guidage longitudinal selon la revendication 2, caractérisé par le fait que chaque dispositif d'écartement (20) est constitué de deux organes de pression (24, 25) qui sont tournés l'un vers l'autre, sont retenus dans les branches (17, 18) du U, et entre les extrémités cunéiformes ou coniques (28, 29) desquels pénètre un organe réglable d'écartement (26).

4. Dispositif de guidage longitudinal selon la revendication 3, caractérisé par le fait que les organes de pression (24, 25) consistent en des chevilles, et

l'organe d'écartement (26) est constitué par un goujon fileté ou élément similaire, dont l'extrémité conique (30) est simultanément appliquée contre les extrémités coniques ou tronconiques (28, 29) des organes de pression (24, 25).

5. Dispositif de guidage longitudinal selon la revendication 4, caractérisé par le fait que les organes de pression (24, 25) sont montés à coulissement dans un corps de retenue (27) et leur extrémité extérieure (37, 38) est retenue, sans faculté de coulissement, dans la branche associée (17, 18) du U de la pièce centrale (5) du U de l'adaptateur; et par le fait que l'organe d'écartement (20) peut être vissé dans un trou taraudé (31) du corps de retenue (27), perpendiculaire auxdits organes.

6. Dispositif de guidage longitudinal selon au moins l'une des revendications 2 à 5, caractérisé par le fait que la pièce centrale (5) du U de l'adaptateur est une pièce cintrée en tôle venue de matriçage, et une découpe matrice (21, 22) se trouve au voisinage de chaque dispositif d'écartement (20), au moins au fond (23) de la pièce centrale (5) du U.

7. Dispositif de guidage longitudinal selon la revendication 6, caractérisé par le fait que la découpe matricée (21, 22) revêt la forme d'une croix dont la branche longue s'étend dans la direction longitudinale de la pièce centrale (5) du U de l'adaptateur, et dont la branche courte s'étend perpendiculairement à cette direction, à peu près jusqu'aux branches (17, 18) du U de la pièce centrale (5) du U.

Fig. 1

Fig. 2

Fig. 3

Fig. 4

Fig. 5